(19) Europäisches Patentamt
European Patent Office
Office européen des brevets

(11) Veröffentlichungsnummer: **0 204 239**
**A2**

(12) # EUROPÄISCHE PATENTANMELDUNG

(21) Anmeldenummer: **86107097.7**

(22) Anmeldetag: **26.05.86**

(51) Int. Cl.[4]: **H 01 M 4/36**
H 01 M 4/28, C 01 G 51/00
C 01 G 53/00

(30) Priorität: **05.06.85 DE 3520108**

(43) Veröffentlichungstag der Anmeldung:
**10.12.86 Patentblatt 86/50**

(84) Benannte Vertragsstaaten:
**DE FR GB SE**

(71) Anmelder: **VARTA Batterie Aktiengesellschaft**
**Am Leineufer 51**
**D-3000 Hannover 21(DE)**

(72) Erfinder: **Glemser, Oskar, Prof. Dr. Dres. e.H. h.c.**
**Richard-Zsigmondy-Weg 10**
**D-3400 Göttingen(DE)**

(72) Erfinder: **Buss, Dieter H., Dr.**
**Sollingstrasse 55 B**
**D-3400 Göttingen(DE)**

(72) Erfinder: **Bauer, Jürgen, Dr.**
**Sensburger Ring 57**
**D-3200 Hildesheim(DE)**

(74) Vertreter: **Kaiser, Dieter Ralf, Dipl.-Ing.**
**Gundelhardtstrasse 72**
**D-6233 Kelkheim/Ts.(DE)**

(54) **Positive Sammlerelektrode für Akkumulatoren mit alkalischem Elektrolyten.**

(57) Eine positive Sammlerelektrode enthält als aktives Material ein Doppelhydroxid der allgemeinen Zusammensetzung

$[M^{2+}{}_{1-x}Fe^{3+}{}_x(OH)_2]^{x+}$ $[(x/n)X^{n-}, yH_2O]^{x-}$, wobei

$0{,}05 \leq x \leq 0{,}4$

$M^{2+} = Ni^{2+}, Co^{2+}$

$X^{n-} = NO_3^-, 1/2\ SO_4^{2-}, 1/2 CO_3^{2-}$,

und erweist sich gegenüber Eisenverunreinigungen im alkalischen Elektrolyten als immun. Das Doppelhydroxid ist eine Doppelschichtverbindung vom Pyroaurit-Typ, die aus dem hex. Brucitgitter des $M(OH)_2$ durch statistische Verteilung von z.B. $Ni^{2+}$ und $Fe^{3+}$ auf die $M^{2+}$-Lagen der Hauptschichten sowie Einlagerung von Anionen $X^{n-}$ desjenigen Salzes, das bei der Herstellung des Doppelhydroxides verwendet wurde, in die Zwischenschichten hervorgeht. Der $Fe^{3+}$-Gehalt begünstigt beim Laden die Oxidation des $M^{2+}$ bis zur 4-wertigen Stufe, was zu erhöhter Masseausnutzbarkeit führt. Das "siderophile" Verhalten der Doppelhydroxidelektrode erlaubt bei vielen alkalischen Akkumulatoren die Verwendung negativer Eisenelektroden anstelle von umweltfeindlichen Cadmiumelektroden. Ein weiterer Vorteil des siderophilen Verhaltens ergibt sich aus der Verbesserung des Ni/Zn-Akkumulators mit einem eisenaquoxidhaltigen Separator gemäß DE-PS 31 17 660.



Croydon Printing Company Ltd.

0204239

# Positive Sammlerelektrode für Akkumulatoren mit alkalischem Elektrolyten

Die Erfindung betrifft eine positive Sammlerelektrode für Akkumulatoren mit alkalischem Elektrolyten.

Im allgemeinen wird das aktive Material der positiven Platten eines alkalischen Akkumulators von Nickelhydroxid gebildet. Das aktive Material der negativen Platten ist - im geladenen Zustand - Cadmium oder Eisen. Unabhängig vom Typ der negativen Elektrode wird der alkalische Akkumulator auch als Stahlakkumulator bezeichnet, worin zum Ausdruck kommt, daß zumindest in seinen charakteristischen Konstruktionselementen Eisen eine vorherrschende Rolle spielt. So verdanken nämlich nicht nur die negativen Akkumulatorplatten, sondern gerade auch die positiven Nickelelektroden ihre besondere mechanische Robustheit der Armierung durch ein perforiertes nickelplattiertes Stahlband, dem auch die Rolle des Masseträgers zufällt. Bei den bekannten Röhrchenplatten, die auf Edison zurückgehen und seither kaum verändert worden sind, wird ein solches Stahlband auf den Dorn einer Ziehmaschine spiralig aufgewickelt und das entstandene Röhrchen nach Verfalzen seiner Ränder mit abwechselnden Lagen aus Nickel(II)-hydroxid und Nickelflocken als Leitmaterial gefüllt. Den positiven Sinterfolienplatten liegt ebenfalls als Einlage ein sehr dünnes perforiertes, vernickeltes Stahlband zugrunde, auf welches im Durchlaufverfahren beidseitig Nickelpulver aufpastiert und aufgesintert wird. Das gleiche Trägergerüst besitzen übrigens auch die negativen Cadmiumsinterelektroden.

In alkalischen Akkumulatoren bilden, sofern man einmal von der negativen Eisen/Eisenhydroxidelektrode des Edison-Akkumulators selbst absieht, die Stahlbandarmierungen die Hauptquelle für Eisenverunreinigungen mit schädlicher Auswirkung auf die Funktion der Nickelelektrode. Die Eisenausschüttung wird durch nicht porenfrei plattierte oder beschädigte Stellen der Bandoberfläche verursacht und kann insbesondere bei Elektroden mit einem Fasermetallgerüst, die neuerdings viel eingesetzt werden, einen erheblichen Umfang annehmen.

S.U. Falk und A.J. Salkind (Alkaline Storage Batteries, John Wiley & Sons, Inc., New York, London, Sidney, Toronto 1969, S. 630/31) nehmen an, daß das Eisen durch anodische Oxidation in KOH primär als Ferrat gelöst wird, welches aber nicht stabil ist, sondern unter Sauerstoffabspaltung dreiwertiges Eisenhydroxid bildet.

Der schädliche Effekt des Eisens wird in einer Verringerung des Ladewirkungsgrads der Nickelelektrode bzw. in einem nicht der Volladung entsprechenden Oxidationszustand gesehen, dadurch verursacht, daß das Eisenhydroxid die Sauerstoffüberspannung an der Elektrodenoberfläche herabsetzt.

Tatsächlich lassen sich analytisch und mit Hilfe des Tyndall-Effektes kolloidal gelöste Eisenaquoxidpartikel im Elektrolyten nachweisen. Aufgrund einer negativen Oberflächenladung sowie ihres, wie W. Böhnstedt, D.H. Buss, E. Häusler und O. Glemser (Electrochim. Acta 19, 941 (1974)) festgestellt haben, superparamagnetischen Verhaltens werden die Partikel in ein inhomogenes Magnetfeld, wie es jede stromdurchflossene Elektrode besitzt, hineingezogen. Es kommt zu einer Anreicherung von Eisenaquoxid in Anodennähe und zur elektrophoretischen Abscheidung an der Nickelhydroxidoberfläche beim Ladungsvorgang.

Im Einklang mit diesen Befunden nehmen Mlynarek et al. (J. Appl. Electrochem. 14, 145 (1984)) an, daß der beim Zyklisieren der Elektrode überschrittene Potentialbereich zur Magnetitbildung ausreicht, die sie als Ursache für den von ihnen volumetrisch nachgewiesenen erhöhten Sauerstoffanteil beim Laden in Anwesenheit von Eisenverunreinigungen betrachten. Magnetit ist als guter elektronischer Leiter mit kleiner Sauerstoffüberspannung bekannt.

Gegen die erwähnten kolloiden Eisenaquoxidpartikel ließ sich die Nickelelektrode bisher nur mittels dichter Membranseparatoren schützen. Diese Maßnahme stellt aber wegen der kostenaufwendigen Herstellung des Membranmaterials und wegen seines relativ hohen Widerstandes, der die zulässigen maximalen Lade- und Entladestromdichten stark einschränkt, keine entschiedene Abhilfe dar.

 

Der Erfindung liegt daher die Aufgabe zugrunde, eine positive Sammlerelektrode für alkalische Akkumulatoren anzugeben, die mit beliebigen negativen Elektroden alkalischer Systeme, insbesondere aber einer Eisen- oder Zinkelektrode, kombiniert werden kann und hinsichtlich ihrer elektrochemischen Funktion unempfindlich gegen Eisenverunreinigungen ist.

Die Aufgabe wird erfindungsgemäß dadurch gelöst, daß ihre aktive

Masse im ungeladenen Zustand ein Doppelhydroxid der allgemeinen Formel

$$[M^{2+}{}_{(1-x)}\ Fe^{3+}{}_x\ (OH)_2]^{x+}\ [x/n\ X^{n-},\ y\ H_2O]^{x-}$$

ist, in welcher der Laufparameter x Werte zwischen 0,05 und 0,4 annehmen kann, wobei $M^{2+}$ ein oxidier- und reduzierbares Kation und $X^{n-}$ wenigstens eine beliebige Anionart zur Ladungskompensation des komplexen doppelhydroxidischen Kations ist.

Eine besonders günstige Zusammensetzung liegt vor, wenn x = 0,2 und $M^{2+} = Ni^{2+}$ oder $Co^{2+}$ ist. Das Anion $X^{n-}$ sollte vorteilhaft $NO_3^-$, $SO_4^{2-}$ oder $CO_3^{2-}$ sein.

Normiert man die oben angegebene Formel für den Fall x = 0,2 auf 1 Atom Fe und geht davon aus, daß das Doppelhydroxid aus einer $Ni^{2+}$- und $Fe^{3+}$-Ionen enthaltenden Nitratlösung gefällt wurde, erhält man z.B.

$$[Ni_4\ Fe\ (OH)_{10}]^+\ [NO_3^-\ yH_2O]^-$$

Einem solchen Doppelhydroxid läßt sich die Doppelschichtstruktur des Minerals Pyroaurit zuordnen, welches anstelle des erfindungsgemäßen Ni oder Co für $M^{2+}$ Magnesium und anstelle des $NO_3^-$ für $1/n\ X^{n-}$ $1/2\ CO_3^{2-}$ enthält. Die Pyroauritstruktur, die bei R. Allmann (Chimia 24, 99 - 108 (1970)) beschrieben wird, leitet sich vom Brucitgitter des $\beta$-$Ni(OH)_2$ dadurch ab, daß die Nickellagen in den $M(OH)_2$-Schichten (M = Ni) auch von anderen Kationen $M^{2+}$ und $M^{3+}$, sofern diese annähernd gleich groß sind, in statistischer Verteilung eingenommen werden können. Dabei wird der durch die hochgeladenen 3wertigen Metallkationen in die Hauptschichten eingebrachte Ladungsüberschuß von den

 

Anionen $X^-$ ausgeglichen. Diesen Ladungsausgleich begünstigen die ursprünglich mit einer Ladung -1 versehenen Hydroxylionen einer Hauptschicht dadurch, daß sie aufgrund der veränderten Umgebung von $M^{2+}$- und $M^{3+}$-Ionen eine Verringerung ihrer Bindungsstärke entsprechend einer Ladung $< 1$ erfahren, was sie befähigt, Ladungen $> 1$ zu kompensieren, wobei das H-Atom einer M-OH-Bindung teilweise durch ein anderes stark negatives Atom X gebunden wird. Das Ergebnis ist die Bildung von Wasserstoffbrücken O-H...X. Auf diese Weise werden $X^-$-Ionen zusammen mit $H_2O$-Molekülen zwischen die ursprünglichen Brucitschichten geschoben, so daß sich eine ionische Struktur mit einer Aufeinanderfolge von Hauptschichten aus

$[M^{2+}{}_{1-x} M^{3+}{}_x(OH)_2]^{x+}$ - Schichtkationen und

$[x/n\ X^{n-}, y\ H_2O]^{x-}$ - Zwischenschichtanionen

(daher "Doppelschichtstruktur") ausbildet.

Bei einem erfindungsgemäßen Ni, Fe-Doppelhydroxid beispielsweise beträgt der Abstand zwischen zwei Hauptschichten ca.790 pm ( = 7,9 Å).

Wie noch gezeigt wird, verhält sich eine Sammlerelektrode mit einem $M^{2+}$, $Fe^{3+}$-Doppelhydroxid gemäß der Erfindung als aktivem Material gegenüber Eisenverunreinigungen elektrochemisch immun. Diese überraschende Eigenschaft prädestiniert sie besonders für den Einsatz in Ni/Fe-Akkumulatoren, was durch die Benennung "siderophile Elektrode" zum Ausdruck gebracht werden soll.

Die präparative Darstellung eines Ni, Fe-Doppelhydroxids beispielsweise erfolgt durch Simultanfällung von $Ni^{2+}$- und $Fe^{3+}$-Ionen aus einer angesäuerten Salzlösung mittels Kalilauge bei einem pH-Wert von 12,5 und bei einer Temperatur von 304 K bis 306 K. Je nach gewünschter Zusammensetzung des Fällungsprodukts ($0,05 \leq x \leq 0,4$) kommt z.B. eine saure Lösung von $Ni(NO_3)_2 \times 6\ H_2O$ und $Fe(NO_3)_3 \times 9\ H_2O$ zum Einsatz, bei welcher die Salzmengen in einem Molverhältnis zwischen 19:1 und 1,5:1 zueinander stehen. Entsprechend stellt sich ein Atomverhältnis Ni/Fe im Doppelhydroxid zwischen den Grenzen 95/5 und 60/40 ein.

Zur praktischen Durchführung der Fällung dient ein auf 305 K thermostatisierter Mehrhalsglaskolben, in dem sich eine wäßrige KOH-Lösung mit dem für die Fällung vorgesehenen pH-Wert befindet. In diesen wird gleichzeitig mit der Metallsalzlösung carbonatfreie 1- bis 3molare KOH-Lösung unter Rühren mit Hilfe von Membranpumpen gespritzt. Abweichungen des pH-Werts vom Sollwert 12,5 werden automatisch mit verdünnter Kalilauge oder 1molarer Salpetersäure auf einen Toleranzbereich +/- 0,1 pH-Einheiten korrigiert.

Eine Variante der Fällungsbedingungen für ein erfindungsgemäßes Doppelhydroxid besteht darin, daß die Fällung der Metallsalze am pH-Wert des isoelektrischen Punktes des Hydroxids vom jeweiligen $M^{2+}$-Ion durchgeführt wird. Auch in diesem Fall sichert ein Thermostat die bevorzugte Reaktionstemperatur von 304 K bis 306 K gegen Temperaturschwankungen, die +/- 1 K übersteigen, ab.

Poröse Sinterkörper als Elektrodenträgergerüste sind einer Imprägnierung mit dem erfindungsgemäßen Doppelhydroxid als aktivem positiven Material ebenfalls zugänglich. In Anlehnung an die bekannte Verfahrenstechnologie bei der Herstellung von Sinterfolienelektroden werden auch hier Sammlerelektroden durch ein- oder mehrmaliges Tränken des Sintergerüstes mit der angesäuerten, $Ni^{2+}$ bzw. $Co^{2+}$ und $Fe^{3+}$ enthaltenden Metallsalzlösung und anschließendes Tauchen in Alkalilauge erhalten.

Es liegt weiterhin im Rahmen der Erfindung, die Tränkung mit einer Schmelze beider Metallsalze durchzuführen und das Doppelhydroxid nach dem Erstarren der Schmelze durch Alkalisieren zur Ausfällung zu bringen.

Die Imprägnierung mittels wässriger Metallsalzlösungen erlaubt es schließlich auch, die Fällung in Sinterelektroden auf elektrochemische Weise vorzunehmen. Bei dem Elektrolyseprozeß ist der poröse Sinterkörper als Kathode geschaltet. Dadurch werden Wasserstoffionen verbraucht und die in den Poren befindlichen Kationen in Form des Doppelhydroxids niedergeschlagen.

Bei der laboratoriumsmäßigen Herstellung verschiedener Versuchsproben, welche auf bestimmte Atomverhältnisse Ni/Fe, nämlich 95/5, 85/15, 80/20 und 70/30 im Fällungsprodukt abzielte, wurde eine Hochalkali-Einstabmeßkette (Typ HA-KO5-NS, Ingold) als Meßnehmer bei der Steuerung der Fällungsreaktion benutzt. Die jeweils zusammenzugebenden Flüssigkeitsvolumina wurden mit Hilfe eines Kleinrechners (Typ AIM-65, Rockwell) ermittelt und deren dem pH-Wert angepaßte Zuflußrate von diesem über die Einwirkung auf die Membranpumpen geregelt. Dabei betrug die Gesamtmetallionenkonzentration der eingesetzten Salzlösung stets 0,5 Mol/l.

Nach dem Ende jeder Fällung wurde die Suspension noch 8 bis 10 Stunden gerührt. Anschließend kam das Reaktionsprodukt über eine Schlauchleitung direkt in eine mit Stickstoff durchspülte Glove-Box und wurde dort in verschließbaren Zentrifugenbechern aus Polypropylen eingefüllt und außerhalb der Box in einer Laborzentrifuge bei 3000 U/min. 10 Minuten lang zentrifugiert. Nach etwa viermaligem Waschen der Proben mit KOH-Lösung vom pH-Wert der Fällungsreaktion oder ggfs. mit doppelt destiliertem Wasser wurde das gereinigte Produkt innerhalb der Box in einen Exsikkator gebracht und drei Tage lang bei Raumtemperatur und 10mbar getrocknet. Die Aufbewahrung aller fertigen Proben bis zu ihrer elektrochemischen Weiteruntersuchung geschah unter $N_2$-Atmosphäre.

In der nachstehenden Tabelle 1 sind einige Ergebnisse der chemischen Analyse zusammengestellt. Vergleichssubstanz ist $\beta$-$Ni(OH)_2$.

<u>Tabelle 1</u>

| | $Ni(OH)_2$ | Ni/Fe 95,5 | Ni/Fe 90/10 | Ni/Fe 80/20 |
|---|---|---|---|---|
| Gew.% Ni | 60 | 56,8 | 50,9 | 44,9 |
| Gew.% Fe | | 3,1 | 5,5 | 10,9 |
| Gew.% N | | 0,3 | 1,3 | 2,45 |
| Gew.% $Ni(OH)_2$ | 94,8 | 89,7 | 80,4 | 70,9 |
| Mol.Verhältn. Ni:Fe | | 17,4:1 | 8,8:1 | 3,9:1 |
| $Fe:NO_3$ | | 1:0,39 | 1:0,94 | 1:0,90 |

Bei der Probe 80/20 stimmen die Analysenwerte, wenn man einen unbedeutenden Wassergehalt außer Betracht läßt, mit der Formel $Ni_4Fe(OH)_{10}NO_3$ recht gut überein.

Außer durch die chemische Analyse ist eine Charakterisierung der erfindungsgemäßen Doppelhydroxide durch ihre Röntgendiagramme möglich. Pulveraufnahmen nach Debye-Scherrer (Cu $K_\alpha$ -Strahlung) zeigen im Gegensatz zu solchen von $\beta$-$Ni(OH)_2$ verbreiterte Linien, was auf gestörte Strukturen schließen läßt. Diese können jedoch einer Doppelschichtverbindung vom Pyroaurit-Typ zugeordnet werden. Während mit zunehmendem Fe-Gehalt im Doppelhydroxid die charakteristischen Brucit-Reflexe verschwinden, treten neue Reflexe auf, welche von einer wesentlich größeren Elementarzelle herrühren. Für diese lassen sich beispielsweise bei dem Präparat Ni/Fe = 80/20 vorbehaltlich einer gewissen Fehlerhaftigkeit wegen der Linienbreite Netzebenenabstände d = 789 pm, d = 2370 pm (003), d = 394 pm (006), d = 274 pm ($10\bar{1}2$) und d = 232 pm ($10\bar{1}5$) ermitteln. Bei höheren Fe-Gehalten, etwa bei dem Präparat Ni/Fe = 70/30 erwiesen sich die Proben als röntgenamorph.

Elektrochemische Messungen zum Nachweis der Eisenresistenz erfindungsgemäßer Ni/Fe-Doppelhydroxide wurden während zyklischer Ladungen und Entladungen durchgeführt. Als Versuchselektroden dienten dabei Teströhrchen von ca. 10 cm Länge und 1 cm Durchmesser, in denen sich ein Gemisch von jeweils 2,9 g Probesubstanz und 7 g Nickelpulver als Leitmaterial mit einem Nickelstab als Ableitung befand. Diese Versuchselektroden wurden im Zentrum eines Plexiglaszylinders plaziert, der an seiner Innenseite mit überdimensionierten negativen Gegenelektroden ausgekleidet war. Gegenelektrode war entweder eine bereits stark korrodierte $Fe/Fe(OH)_2$-Elektrode, um eine Eisenvergiftung zu forcieren, oder eine $Cd/Cd(OH)_2$-Elektrode vom Sinterfolientyp. Als Elektrolyt diente 30%ige KOH-Lösung. Die Strombedingungen waren stets: 600 oder 700 Minuten lang mit 100 mA laden, mit 100 mA bis zum Erreichen einer Zellspannung von 1 V bzw. bis zu einem Potential von 0,1 V gegen Hg/HgO entladen.

In der Tabelle 2 sind die bei ausgewählten 80/20-Proben jeweils beim 5. und beim 30. Zyklus eines nicht abgeschlossenen Zyklentests entnommenen Kapazitäten festgehalten und mit denen einer $Ni(OH)_2$-Elektrode (Inhalt des Teströhrchens ebenfalls 2,9 g $\beta$-$Ni(OH)_2$ + 7 g Nickelpulver) verglichen.

Tabelle 2

| | $Ni_4Fe(OH)_{10}NO_3$ | | $Ni(OH)_2$ |
|---|---|---|---|
| Zykl. Nr. | vers. $Cd/Cd(OH)_2$ mAh/g | vers. $Fe/Fe(OH)_2$ mAh/g | vers. $Fe/Fe(OH)_2$ mAh/g |
| 1 | | | 129 |
| 2 | | | 199 |
| 3 | | | 95 |
| 4 | | | 59 |
| 5 | 201 (283) | 197 (278) | 35 |
| 6 | | | 11 |
| 7 | | | 8 |
| . | | | |
| . | | | |
| . | | | |
| 30 | 156 (221) | 157 (222) | |

Die für das $Ni_4Fe(OH)_{10}NO_3$-Doppelhydroxid angegebenen Stromausbeuten sind Mittelwerte aus zwei parallelen Testreihen. Die in Klammern beigefügten Zahlenwerte sind Stromausbeuten, die sich rechnerisch ergeben, wenn man die tatsächlich erhaltenen Stromausbeuten, welche mit einem analytisch ermittelten $Ni(OH)_2$-Gehalt von nur 70,9 Gew.% im Doppelhydroxid (vergl. Tabelle 1) korrespondieren, auf ein eisenfreies Hydroxid (100 Gew.% $Ni(OH)_2$ extrapoliert. Daß diese Zahlenwerte die theoretische Faraday-Ausbeute von 289 mAh/g für den Übergang $Ni(OH)_2 \longrightarrow$ Ni O OH zumindest in der Anfangsphase des Zyklentests nahezu erreichen, gibt einen Hinweis darauf, daß das Nickel in Gegenwart des an den Redox-Vorgängen selbst nicht beteiligten Eisens über die 3wertige Stufe hinaus aufgeladen wird.

Wie aus der Tabelle 2 weiter ersichtlich, bleibt für eine erfindungsgemäße "siderophile" Nickelelektrode die Wahl der Gegenelektrode - $Cd/CdOH_2$ oder $Fe/Fe(OH)_2$ - beim zyklischen Lade-/Entladebetrieb zumindest bis zum 30. Zyklus ohne spezifischen Einfluß auf die Masseausnutzbarkeit. Es zeigt sich in beiden Fällen ein gleichmäßiger und bei der vorliegenden zylindrischen Elektrodengeometrie, die nicht idealen Entladebedingungen entspricht, durchaus zu erwartender Kapazitätsabfall.

In auffallendem Gegensatz dazu steht der Kapazitätsverlauf bei der nur reines ß-$Ni(OH)_2$ enthaltenden und mit der $Fe/Fe(OH)_2$-Gegenelektrode zyklisierten Vergleichselektrode. Nach einem Konditionsmaximum beim 2. Zyklus ist bereits nach dem 7. Zyklus durch Eisenaufnahme ein totaler Kapazitätsverlust eingetreten.

Tatsächlich wird durch den Einbau von 3wertigem Eisen in das Wirtsgitter des $Ni(OH)_2$ bzw. $Co(OH)_2$ beim erfindungsgemäßen Doppelhydroxid ein großer Teil des 2wertigen Metalls beim Laden in die 4wertige Oxidationsstufe übergeführt. Für eine Sammlerelektrode gemäß der Erfindung bedeutet dies, daß ein mit dem aufgenommenen Eisen verknüpfter Energiedichte-Verlust - da es zur Stromlieferung nicht beiträgt -, über die Erhöhung der spezifischen Kapazität des 2wertigen Metallhydroxids voll ausgeglichen wird.

Die Ladungsvorgänge lassen sich am Beispiel des Ni/Fe-Doppelhydroxids wie folgt formulieren:

Ladung zu $Ni^{3+}$:

$$[Ni_4^{2+} Fe^{3+} (OH)_{10}]^+ [NO_3^- \; yH_2O]^- \longrightarrow$$

$$[Ni_4^{3+} Fe^{3+} O_4 (OH)_6]^+ [NO_3^- \; yH_2O]^- + 4H^+ + 4e^-$$

Ladung zu $Ni^{4+}$:

$$[Ni_4^{2+} Fe^{3+} (OH)_{10}]^+ [NO_3^- \; y\,H_2O]^- \longrightarrow$$

$$[Ni_4^{4+} Fe^{3+} O_8 (OH)_2]^+ [NO_3^- \; y\,H_2O]^- + 8H^+ + 8e^-$$

Hierbei werden, während der Oxidationsgrad des Nickels zunimmt, Protonen abdissoziiert, was zu einer erhöhten Azidität der Hauptschichten und ersatzweisen Einlagerung hydratisierter $K^+$- bzw. $Li^+$-Ionen aus dem alkalischen Elektrolyten führt.

Durch die Anwesenheit der $Fe^{3+}$-Ionen in der Hauptschicht bleiben jedoch selbst bei vollständiger Oxidation des $Ni^{2+}$ zu $Ni^{4+}$ die beiden formal zu jedem

$Fe^{3+}$-Ion gehörenden Protonen erhalten. Ein gewisser Restbetrag ist für die Protonendiffusion erforderlich und kann zur Ladungskompensation der nach außen negativ polarisierten Hauptschichten beitragen. Dies begünstigt die elektrochemische Oxidation der Nickelionen bis zu $Ni^{4+}$, was sich im Vergleich zu reinem Nickelhydroxid in einer viel höheren Ladekapazität äußert.

Im Einklang mit der Entstehung von 4wertigem Nickel steht auch der Befund, daß eine erfindungsgemäße Elektrode bei einer um ca. 60 mV höheren Potentiallage im Vergleich zu reinem Nickelhydroxid entlädt. Darüber hinaus konnte im zeitlichen Ladungsverlauf ein scharfer Übergang vom Potential der eigentlichen Ladungsphase zum Potential der Sauerstoffentwicklung beobachtet werden.

Der wesentliche Vorteil der "siderophilen" Sammlerelektrode gemäß der Erfindung liegt jedoch in ihrer überraschenden Unempfindlichkeit gegen Eisenverunreinigungen, die dadurch besondere Bedeutung erlangt, daß in vielen Anwendungsfällen der Praxis auf den Einsatz von $Cd/Cd(OH)_2$-Elektroden zugunsten umweltfreundlicherer Eisenelektroden verzichtet werden kann.

Ganz besonders vorteilhaft läßt sich die siderophile Nickelelektrode in einem Nickel/Zink-Akkumulator verwenden, für den gemäß DE-PS 31 17 660 ein spezieller Separator vorgeschlagen wird, dessen über seine Oberfläche verteilten Eisenaquoxidpartikel durch direkte Berührung mit Zink zu elektrokatalytisch aktiven, separaten Eisenpartikeln reduziert werden, wodurch eine spontane Wasserstoffentwicklung ausgelöst wird, welche auf diese Weise das bei Zinkelektroden gefürchtete Dendritenwachstum unterbricht. Der Vorteil der in diesem Fall gezielten, zweckdienlichen Einbringung von Eisenverunreinigungen in die Zelle käme in Verbindung mit einer eisenempfindlichen konventionellen Nickelelektrode nicht zum Tragen.

Zusammengefaßt besitzt die Sammlerelektrode gemäß der Erfindung die nachstehenden Vorteile:

Zwischen Ladungsphase und Sauerstoffentwicklung liegt ein ausgeprägter Potentialsprung. Dieser ermöglicht als Spannungssignal eine Ladebegrenzung und macht überflüssige $H_2O$-Zersetzung vermeidbar.

Die Elektrode besitzt eine harte Entladecharakteristik.

Bei optimaler Zusammensetzung des gefällten Doppelhydroxids ist die Ladekapazität, bezogen auf die Gesamtmasse, besser als der Stand der Technik bei einer nur aus $M(OH)_2$ (M = Ni, Co) gebildeten positiven Elektrode.

Das erfindungsgemäße Elektrodenmaterial ist ohne konstruktive Änderungen in Knopfzellen oder Taschenelektroden verwendbar.

Das siderophile Verhalten der Sammlerelektrode macht Membranseparatoren überflüssig und erlaubt relativ verlustfrei hohe Stromdichten beim Laden und Entladen.

Das Einsparen von Nickel durch Eisen hat nicht eine Verminderung der Ladekapazität im Vergleich zu einer handelsüblichen Nickelelektrode zur Folge. Außer in der aktiven Masse ist ein weiteres Einsparen von Nickel im Gerüstmaterial durch Eisen möglich.

Der Gesamtenergie-Wirkungsgrad ist bei der siderophilen Nickelelektrode günstiger als bei reinem Nickelhyroxid, da das Ladepotential niedriger und das Entladepotential höher als bei reinem Nickelhydroxid liegt.

EA 460-DE

Kelkheim, 29.05.1985
T A P - Dr. Ns / pr

VARTA Batterie Aktiengesellschaft,
Am Leineufer 51, 3000 Hannover 21

## Patentansprüche

1. Positive Sammlerelektrode für Akkumulatoren mit alkalischem Elektrolyten, dadurch gekennzeichnet, daß ihre aktive Masse im ungeladenen Zustand ein Doppelhydroxid der allgemeinen Formel

$$\left[M^{2+}{}_{(1-x)}\,Fe^{3+}{}_{x}(OH)_2\right]^{x+}\left[(x/n)\,X^{n-},\ y\,H_2O\right]^{x-}$$

ist, in welcher der Laufparameter x Werte zwischen 0,05 und 0,4 annehmen kann, wobei $M^{2+}$ ein oxidier- und reduzierbares Kation und $X^{n-}$ wenigstens eine beliebige Anionart zur Ladungskompensation des komplexen doppelhydroxidischen Kations ist.

2. Positive Sammlerelektrode nach Anspruch 1, dadurch gekennzeichnet, daß der Laufparameter x = 0,2 ist.

3. Positive Sammlerelektrode nach den Ansprüchen 1 und 2, dadurch gekennzeichnet, daß das Doppelhydroxid eine Doppelschichtstruktur besitzt, die derjenigen des Minerals Pyroaurit entspricht.

4. Positive Sammlerelektrode nach den Ansprüchen 1 bis 3, dadurch gekennzeichnet, daß $M^{2+} = Ni^{2+}$ ist.

5. Positive Sammlerelektrode nach den Ansprüchen 1 bis 3, dadurch gekennzeichnet, daß $M^{2+} = Co^{2+}$ ist.

6. Positive Sammlerelektrode nach einem der Ansprüche 4 oder 5, dadurch gekennzeichnet, daß $X^{n-}$ ein Anion aus der Reihe

$NO_3^-$, $SO_4^{2-}$, $CO_3^{2-}$ ist.

7. Positive Sammlerelektrode nach den Ansprüchen 1 bis 6, dadurch gekennzeichnet, daß ihre aktive Masse eisenfreundlich, d.h. siderophil ist.

8. Positive Sammlerelektrode nach den Ansprüchen 1 bis 7, dadurch gekennzeichnet, daß ihrer aktiven Masse Leitmittel beigemischt sind.

9. Verfahren zur Herstellung eines Doppelhydroxids als aktives Material für eine positive Sammlerelektrode nach einem der Ansprüche 1 bis 8, dadurch gekennzeichnet, daß aus einer angesäuerten Salzlösung, die $M^{2+}$-Ionen und $Fe^{3+}$-Ionen in einem Molverhältnis zwischen 19:1 und 1,5:1 enthält, das Doppelhydroxid mittels Alkalilauge bei einem pH-Wert um 12,5 und bei einer Temperatur von 304 bis 306 K ausgefällt wird.

10. Verfahren nach Anspruch 9, dadurch gekennzeichnet, daß die angesäuerte Salzlösung und die Alkalihydroxidlösung pH-gesteuert unter Rühren in eine Vorlage mit definiertem pH-Wert eingeleitet werden, wobei der pH-Wert der dabei entstehenden Fällungssuspension um nicht mehr als +/- 0,1 pH-Einheiten vom Sollwert abweicht.

11. Verfahren zur Herstellung eines Doppelhydroxids als aktives Material für eine positive Sammlerelektrode nach einem der Ansprüche 1 bis 8, dadurch gekennzeichnet, daß aus einer angesäuerten Salzlösung, die $M^{2+}$-Ionen und $Fe^{3+}$-Ionen in einem Molverhältnis zwischen 19:1 und 1,5:1 enthält, das Doppelhydroxid mittels Alkalilauge am pH-Wert des isoelektrischen Punktes des Hydroxids vom $M^{2+}$-Ion ausgefällt wird.

12. Verfahren nach Anspruch 11, dadurch gekennzeichnet, daß die Fällungsreaktion auf +/- 1 K thermostatisiert, vorzugsweise bei 304 bis 306 K durchgeführt wird.

13. Verfahren nach Anspruch 9, dadurch gekennzeichnet, daß die Fällung in Sinterelektroden durch ein- oder mehrmaliges Tränken mit der angesäuerten Metallsalzlösung und anschließendes Tauchen in Alkalilauge durchgeführt wird.

14. Verfahren zur Herstellung eines Doppelhydroxids als aktives Material für eine positive Sammlerelektrode nach einem der Ansprüche 1 bis 8, dadurch gekennzeichnet, daß ein Sinterelektrodengerüst mit einer Metallsalzschmelze, die $M^{2+}$-Ionen und $Fe^{3}$-Ionen in einem Molverhältnis zwischen 19:1 und 1,5:1 enthält, getränkt wird und daß nach dem Erstarren der Schmelze das Doppelhydroxid durch Alkalisieren zum Ausfällen gebracht wird.

15. Verfahren nach einem der Ansprüche 13 oder 14, dadurch gekennzeichnet, daß die getränkten Sinterelektrodengerüste in eine Alkalilauge von definiertem, durch gesteuerte Laugezugabe konstant gehaltenen pH-Wert eingetaucht wird.

16. Verfahren zur Herstellung eines Doppelhydroxids als aktives Material für eine positive Sammlerelektrode nach einem der Ansprüche 1 bis 8, dadurch gekennzeichnet, daß ein Sinterelektrodengerüst mit einer Metallsalzlösung, die $M^{2+}$-Ionen und $Fe^{3+}$-Ionen in einem Molverhältnis zwischen 19:1 und 1,5:1 enthält, getränkt wird und daß das Doppelhydroxid durch eine elektrochemische Reaktion ausgefällt wird.